Europäisches Patentamt

(19) European Patent Office

Office européen des brevets

(11) Publication number: **0 228 227 B1**

# EUROPEAN PATENT SPECIFICATION

(45) Date of publication of patent specification: **09.10.91**  (51) Int. Cl.⁵: **G11B 7/08, H02K 41/035**

(21) Application number: **86309764.8**

(22) Date of filing: **15.12.86**

(54) **Apparatus for urging an axially movable member to a neutral axial position.**

(30) Priority: **17.12.85 JP 283735/85**

(43) Date of publication of application:
**08.07.87 Bulletin 87/28**

(45) Publication of the grant of the patent:
**09.10.91 Bulletin 91/41**

(84) Designated Contracting States:
**DE FR GB NL**

(56) References cited:
**EP-A- 0 092 997**
**EP-A- 0 133 994**

**PATENT ABSTRACTS OF JAPAN, vol. 9, no.**
**109 (P-355)[1832], 14th May 1985; & JP-A-59**
**229 750 (SEIKO DENSHI KOGYO K.K.)**
**24-12-1984**

**Idem**

**PATENT ABSTRACTS OF JAPAN, vol. 9, no.**
**236 (P-390)[1959], 21st September 1985; &**
**JP-A-60 89 839 (ASAHI KOUGAKU KOGYO**
**K.K.) 20-05-1985**

(73) Proprietor: **SEIKO INSTRUMENTS INC.**
**31-1, Kameido 6-chome Koto-ku**
**Tokyo 136(JP)**

(72) Inventor: **Nanno, Ikuo**
**31-1, Kameido 6-chome**
**Koto-ku Tokyo(JP)**
Inventor: **Nakajima, Atsunobu**
**31-1, Kameido 6-chome**
**Koto-ku Tokyo(JP)**
Inventor: **Hoshi, Seiji**
**2-10-10 Kasugaoka, Fujiidera-shi**
**Osaka-fu 583(JP)**
Inventor: **Yamamoto, Hiroyoshi**
**31-1, Kameido 6-chome**
**Koto-ku Tokyo(JP)**

(74) Representative: **Miller, Joseph et al**
**J. MILLER & CO. Lincoln House 296-302 High**
**Holborn**
**London WC1V 7JH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

PATENT ABSTRACTS OF JAPAN, vol. 9, no. 236 (P-390)[1959], 21st September 1985; & JP-A-60 89 838 (ASAHI KOUGAKU KOGYO K.K.) 20-05-1985

PATENT ABSTRACTS OF JAPAN, vol. 10, no. 312 (P-509)[2368], 23rd October 1986; & JP-A-61 122 941 (NIPPON KOGAKU K.K.) 10-06-1986

## Description

This invention relates to apparatus for urging an axially movable member to a neutral axial position and it relates more particularly to such apparatus when used in an optical pickup so as to retain the neutral point of focusing in equipment in which focusing and tracking are performed by sliding a lens in the axial direction and by rotating it about a shaft, respectively.

An optical pickup is known in which focusing and tracking are performed by sliding a lens in the axial direction and by rotating it about a shaft, respectively. In such apparatus, it is common to use a rubber spring as a focusing spring.

This known method of retention by a rubber spring, however, requires the provision of space for the rubber spring, and is therefore very inconvenient from the viewpoint of the desirability of reducing the size of the pickup.

Moreover, if the rubber spring is inaccurately mounted in such a way that it is distorted, non-linearity may be generated in the spring action.

In addition, the rubber spring does not have good temperature characteristics due to the physical properties of its material, and it deteriorates as its resonance frequency or sensitivity changes.

In JP-A-59-229,750 there is disclosed an apparatus for urging an axially movable member towards a neutral axial position comprising an axially movable member which is axially movable over a shaft; coil means mounted on the axially movable member for adjusting the axial position of the latter; and magnetic circuit means for generating a magnetic field in which the coil means is positioned, the axially movable member being provided with pieces of magnetic material which are disposed in said magnetic field so that the latter exerts a force which urges the axially movable member towards a neutral axial position.

According to the present invention, there is provided apparatus for urging an axially movable member towards a neutral axial position comprising an axially movable member which is axially movable over a shaft; coil means mounted on the axially movable member for adjusting the axial position of the latter; and magnetic circuit means for generating a magnetic field in which the coil means is positioned, the axially movable member being provided with pieces of magnetic material which are disposed in said magnetic field so that the latter exerts a force which urges the axially movable member towards a neutral axial position, characterised in that the pieces of magnetic material are disposed adjacent axially opposite ends of the axially movable member so that there is a substantially linear relationship between the said force and the movement of the axially movable member.

The magnetic circuit means may comprise one or more permanent magnets and one or more yokes of magnetically permeable material, the yoke or yokes being disposed radially inwardly and/or radially outwardly of the axially movable member. Thus there may be both an inner yoke and an outer yoke or, alternatively, one single yoke may be provided.

Preferably, the or each magnet is disposed between a said yoke and the axially movable member.

Preferably, the said member is both axially movable and rotatable, the said member carrying an objective lens which is radially spaced from the shaft, the said member being provided with tracking means for moving the said member circumferentially so as to effect tracking of the objective lens.

In its preferred form, the apparatus of the present invention thus requires no space for a spring to be used for focusing, is easily manufactured, and exhibits excellent temperature characteristics, thereby overcoming the problems of the known apparatus referred to above.

The present invention is based on the principle that a piece of magnetic material, when placed in a magnetic field which has non-uniform magnetic field distribution, is subjected to a force acting in the direction in which the potential energy of the piece of magnetic material becomes stable, and utilizes this force as a spring force employed for focusing.

In the preferred construction, a number of pieces of magnetic material are attached to the peripheral portion of an objective lens retaining holder such that they are disposed at the centre or near the ends of two magnetic gaps as viewed in the axial direction. The magnetic gaps form a magnetic field in which the magnetic flux density is at a maximum at the centre and gradually decreases farther from the centre owing to leakage flux. In consequence, when the objective lens retaining holder slides in the focusing (i.e. the axial) direction and the pieces of magnetic material are located apart from the centre, they are subjected to a force which tends to pull them back into the magnetic gaps. This force constitutes a magnetic spring force in the focusing direction.

The invention is illustrated, merely by way of example, in the accompanying drawings, in which:-

Figure 1 is a perspective view of a first embodiment of an apparatus of the present invention,

Figure 2 is a perspective view of a known apparatus having a rubber spring,

Figure 3 is a side cross-sectional view illustrating the magnetic field distribution in a magnetic gap which is obtained in the first embodiment of the present invention;

Figure 4 is a side cross-sectional view illustrating the position of pieces of magnetic material employed in the first embodiment of the present invention,

Figure 5a is a graph illustrating the magnetic spring force acting in the focusing direction if a piece of magnetic material is provided at the centre, as opposed to the ends, of the gap shown in Figure 4,

Figure 5b is a graph illustrating the magnetic spring force acting in the focusing direction, when pieces of magnetic material are provided at the upper and lower ends of the gap shown in Figure 4,

Figure 6 is a perspective view of a second embodiment of an apparatus according to the present invention,

Figure 7 is a side cross-sectional view illustrating the magnetic field distribution in a magnetic gap which is obtained in another embodiment of the present invention, and

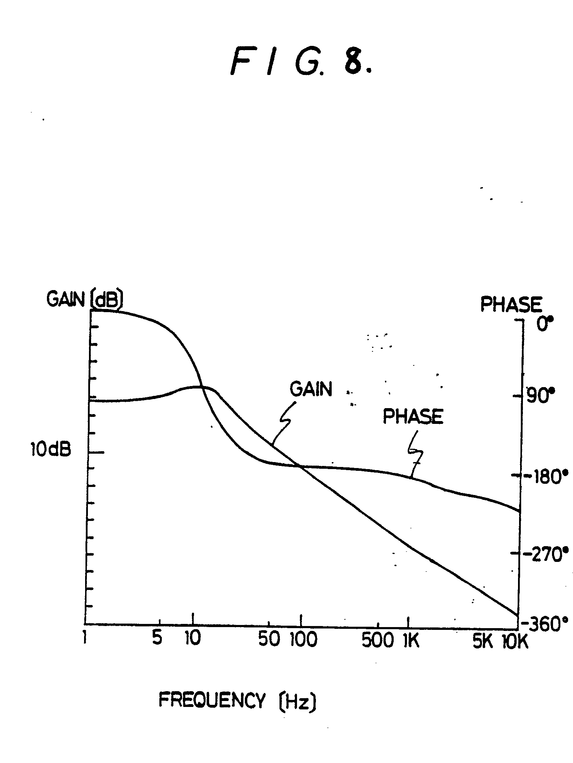

Figure 8 shows the results of measurement of the frequency characteristics obtained in the various embodiments of the present invention.

Terms such as "upward" and "downward", as used in the description below, are to be understood to refer to directions as seen in the accompanying drawings.

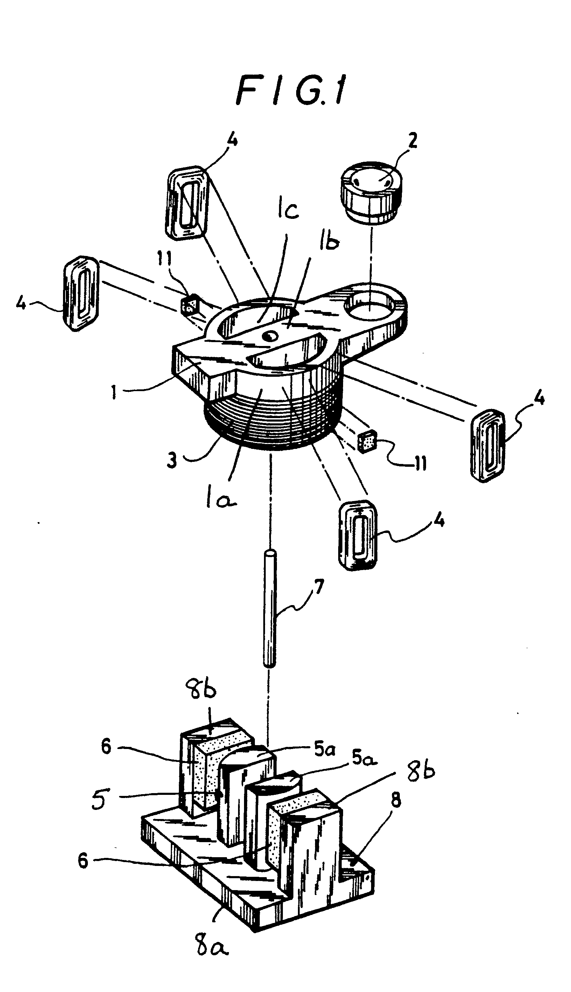

Referring first to Figure 1, an objective lens retaining holder 1 has a tubular portion 1a and a diametrically extending arm 1b which extends radially outwardly of the tubular portion 1a on diametrically opposite sides of the latter. The arm 1b is provided with an objective lens 2. The tubular portion 1a is provided with a focusing coil 3 for adjusting focusing, tracking coils 4 for adjusting tracking, and two pieces of magnetically permeable material 11, e.g. unmagnetised iron or nickel. The holder 1 can be rotated about a supporting shaft 7 and can be slid in the axial direction of the supporting shaft 7. As will be appreciated, the objective lens 2 is radially spaced from the shaft 7. The focusing coil 3 and the tracking coils 4 are mounted on the outer surface of the tubular portion 1a and are insulated from each other.

An outer yoke 8 of magnetically permeable material has a plate 8a which is mounted beneath the holder 1. The outer yoke 8 has two spaced apart blocks 8b which are mounted on or integral with the plate 8a and each of which is disposed radially outwardly of and is spaced from the tubular portion 1a.

An inner yoke 5 of magnetically permeable material comprises two spaced apart blocks 5a which are mounted on or are integral with the plate 8a. The blocks 5a are respectively disposed within slots 1c in the holder 1, the slots 1c being formed between the tubular portion 1a and the arm 1b. The blocks 5a are radially spaced from the tubular portion 1a.

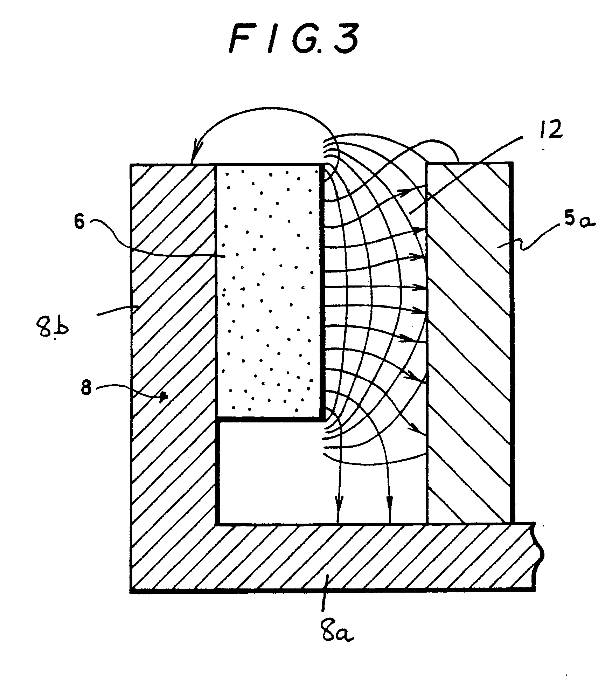

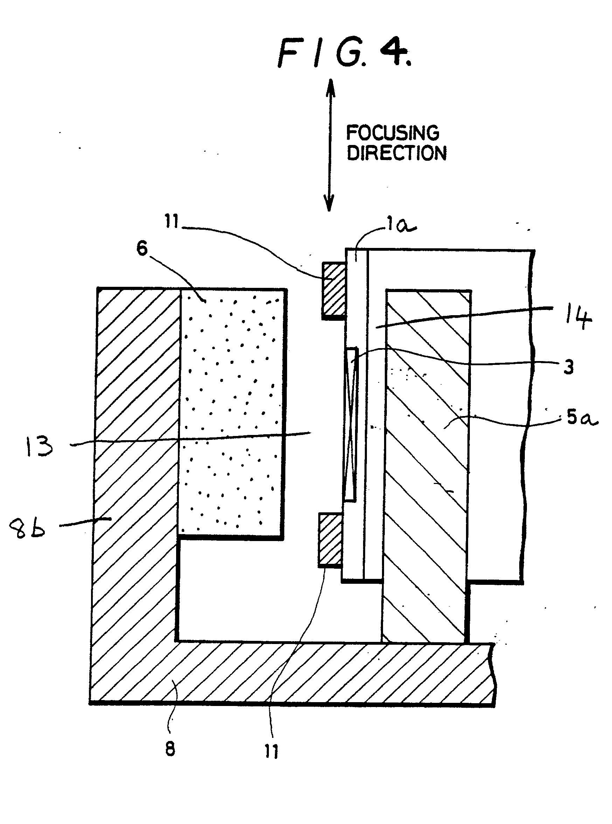

Each of the blocks 8b of the outer yoke 8 carries on its radially inner side a permanent magnet 6 which, as shown in Figure 3, is radially spaced from the respective block 5a of the inner yoke 5 so as to provide a space 12 therebetween. The tubular portion 1a is mounted in the space 12 so as to provide an outer magnetic gap 13 (Figure 4) between the magnets 6 and the tubular portion 1a and an inner magnetic gap 14 (Figure 4) between the blocks 5a and the tubular portion 1a, the pieces of magnetic material 11 being disposed within the outer magnetic gap 13.

Figure 3 shows the magnetic field distribution in the space 12. The lines with arrows adjacent one end thereof indicate lines of magnetic force. The density of these lines of magnetic force represents the intensity of the magnetic field. Points of equal magnetic field intensity are connected with solid lines to show the magnetic field distribution. In the space 12, the magnetic flux density is at a maximum at the centre and decreases as it goes away from the centre due to leakage flux, as can be seen in Figure 3.

The apparatus shown in Figure 4 has two pieces of magnetic material 11 which are respectively provided at the upper and lower ends of the outer magnetic gap 13. This provides a magnetic spring for use in focusing which has further linear characteristics. Thus in the Figure 4 construction, the pieces of magnetic material 11 are respectively disposed at positions at which they are subjected to substantially equal and opposite magnetic forces acting in the axial direction when the objective lens retaining holder 1 is in the neutral axial position. Thus, as shown in Figure 4, they may be disposed adjacent axially opposite ends of the objective lens retaining holder 1.

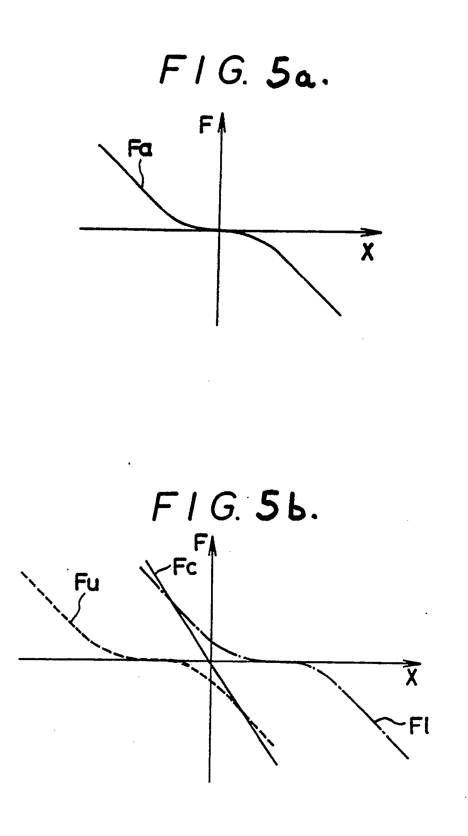

Figures 5a and 5b are graphs illustrating how the spring force is made linear by providing the pieces of magnetic material 11 at the upper and lower ends of the outer magnetic gap 13. As shown in Figure 5a, the spring force FA shows non-linear characteristics, strictly speaking, if a single piece of magnetic material 11 were to be provided only at the centre of the outer magnetic gap 13. A linear spring force Fc for focusing, such as the one shown by the solid line in Figure 5b, is, however, available when the magnetic spring forces provided by the two pieces of magnetic material 11 mounted at the upper and lower ends of the outer magnetic gap 13, which are shown in Figure 5b by broken lines Fu and chain lines Fl respectively, are combined. In Figures 5a and 5b the vertical axis F relates to the magnetic spring force in the focusing direction and the horizontal axis X relates to the position of the tubular portion 1a in the focusing direction.

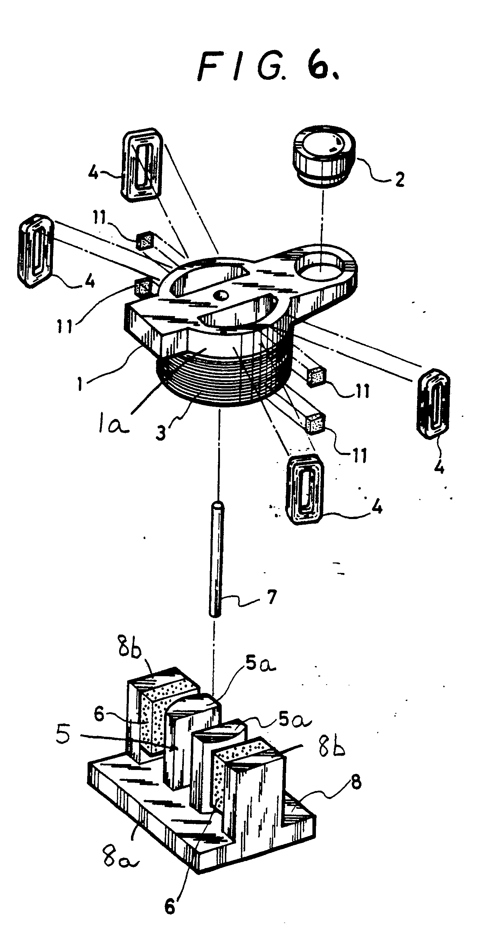

Figure 6 is a perspective view of an apparatus according to the present invention with pieces of magnetic material 11 provided at the upper and lower ends of the outer magnetic gap 13. Figure 6 will not be described in detail since it is generally similar to Figure 1.

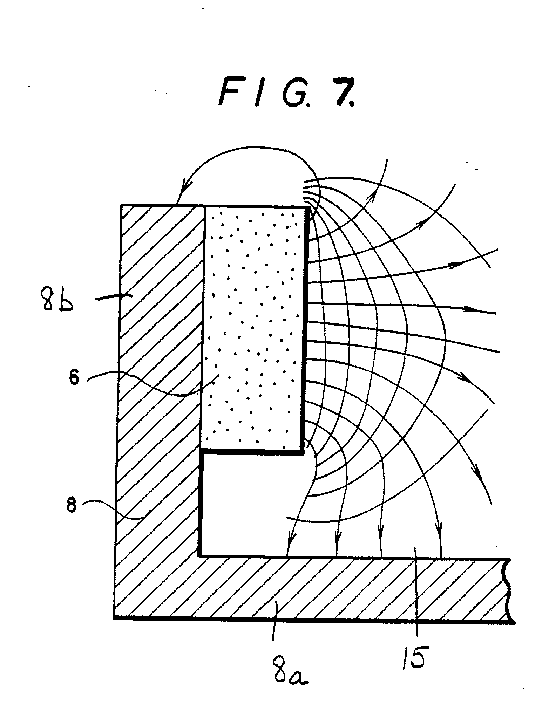

A magnetic spring acting in the focusing direction can similarly be formed in an apparatus which does not have the inner yoke 5. Figure 7 is a side cross-sectional view illustrating the magnetic field distribution in a magnetic gap 15 in this case. The lines with arrows provided adjacent one end thereof indicate lines of magnetic force. The solid lines connect the points of equal intensity of the magnetic field. Although the magnetic field distribution when there is no inner yoke 5 is slightly different from the one shown in Figure 3, it is possible to form substantially the same magnetic spring for focusing.

The embodiments of the invention shown in the drawings employ pieces of magnetic material 11 having a rectangular configuration. However, the pieces of magnetic material 11 may be round in shape, or may be shaped in the form of a ring which can be fitted or attached to the objective lens retaining holder 1. They may also be shaped into rectangles which have longer sides in the axial direction, or into arcuate members having longer sides of the circumferential than in the axial direction.

Figure 0 is a graph illustrating the frequency characteristics obtained in an apparatus in accordance with any of the embodiments mentioned above. This graph shows that no harmonics of vibrations are generated and that excellent spring characteristics are available.

As is clear from the foregoing description, a magnetic spring for use in focusing can be provided simply by attaching pieces of magnetic material 11 to opposite ends of the objective lens retaining holder 1. In consequence, the space required for the rubber spring in the known apparatus can be eliminated, thereby contributing to a reduction in the size of the apparatus.

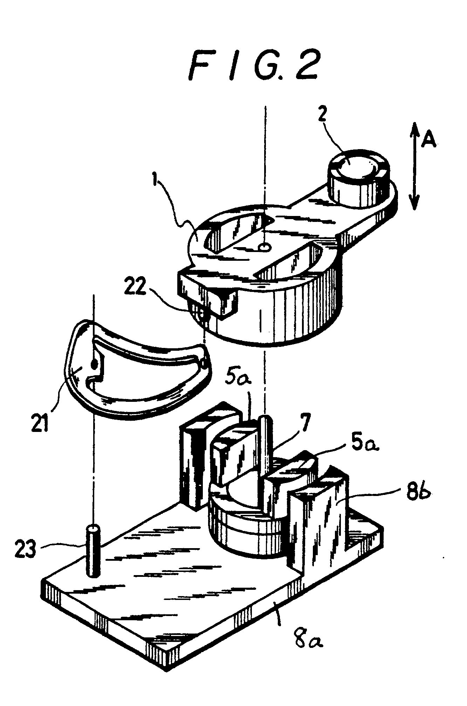

In contrast to the present invention in Figure 2 there is shown a known optical pick-up in which focusing and tracking are performed by sliding a lens in the axial direction and by rotating it about a shaft respectively.

In the construction of Figure 2, one end of a rubber spring 21 is fixed to a pin 23 which is set in a fixed portion of the apparatus such as a yoke, and the other end of the rubber spring 21 is fixed through a pin 22 to the objective lens retaining holder 1 which constitutes a movable portion. In consequence, when the objective lens moves in the focusing direction indicated by A, the objective lens 2 is retained in a given axial position by the resilient force of the rubber spring 21, thereby maintaining the focusing staiblity.

However, when such retention is performed by a rubber spring, since it is difficult to mount the latter accurately without distorting the rubber, the spring action may not be linear. On the contrary, it is relatively easy in the case of the present invention to attach the piece or pieces of magnetic material 11 to the objective lens retaining holder 1 with accuracy, and the magnetic spring so obtained is therefore almost free from such problems.

Since the magnetic spring employed in the present invention, moreover, utilizes a magnetic action, it has excellent temperature characteristics, compared with the known rubber spring.

## Claims

1. Apparatus for urging an axially movable member towards a neutral axial position, the apparatus comprising an axially movable member (1) which is axially movable over a shaft (7); coil means (3) mounted on the axially movable member (1) for adjusting the axial position of the latter; and magnetic circuit means (5,6,8) for generating a magnetic field in which the coil means (3) is positioned, the axially movable member (1) being provided with pieces of magnetic material (11) which are disposed in said magnetic field so that the latter exerts a force which urges the axially movable member (1) towards a neutral axial position, the apparatus being characterised in that the pieces of magnetic material (11) are disposed adjacent axially opposite ends of the axially movable member (1) so that there is a substantially linear relationship (Fc) between the said force and the movement of the axially movable member (1).

2. Apparatus as claimed in claim 1 characterised in that the magnetic circuit means (5,6,8) comprises one or more permanent magnets (6) and one or more yokes (5,8) of magnetically permeable material, the yoke or yokes (5,8) being disposed radially inwardly and/or outwardly of the axially movable member (1).

3. Apparatus as claimed in claim 2 characterised in that there is both an inner yoke (5) and an outer yoke (8).

4. Apparatus as claimed in claim 2 characterised in that one single yoke (5,8) is provided.

5. Apparatus as claimed in any of claims 2-4 characterised in that the or each magnet (6) is disposed between a said yoke (5,8) and the axially movable member (1).

6. Apparatus as claimed in any preceding claim characterised in that the said member (1) is both axially movable and rotatable, the said member (1) carrying an objective lens (2) which is radially spaced from the shaft (7), the said member (1) being provided with tracking means (4) for moving the said member (1) circumferentially so as to effect tracking of the objective lens (2).

**Revendications**

1. Dispositif pour solliciter une pièce mobile en direction axiale vers une position axiale neutre, ce dispositif comprenant une pièce mobile en direction axiale (1) qui peut être déplacée axialement sur un axe (7); une bobine (3) montée sur la pièce mobile en direction axiale (1) pour régler la position axiale de cette dernière; et un circuit magnétique (5, 6, 8) destiné à produire un champ magnétique dans lequel la bobine (3) est placée, la pièce mobile en direction axiale (1) comportant des éléments en matériau magnétique (11) qui sont disposés dans le champ magnétique, de façon que ce dernier exerce une force qui sollicite la pièce mobile en direction axiale (1) vers une position axiale neutre, le dispositif étant caractérisé en ce que les éléments en matériau magnétique (11) sont disposés dans des positions adjacentes aux extrémités opposées en direction axiale de la pièce mobile en direction axiale (1), de façon qu'il y ait une relation pratiquement linéaire (Fc) entre la force précitée et le mouvement de la pièce mobile en direction axiale.

2. Dispositif selon la revendication 1, caractérisé en ce que le circuit magnétique (5, 6, 8) comprend un ou plusieurs aimants permanents (6) et une ou plusieurs culasses (5, 8) en un matériau à perméabilité magnétique élevée, la culasse ou les culasses étant disposées radialement du côté intérieur et/ou du côté extérieur de la pièce mobile en direction axiale (1).

3. Dispositif selon la revendication 2, caractérisé en ce qu'il comporte à la fois une culasse intérieure (5) et une culasse extérieure (8).

4. Dispositif selon la revendication 2, caractérisé en ce qu'il comporte une seule culasse (5, 8).

5. Dispositif selon l'une quelconque des revendications 2-4, caractérisé en ce que l'aimant ou chaque aimant (6) est placé entre l'une des culasses précitées (5, 8) et la pièce mobile en direction axiale (1).

6. Dispositif selon l'une quelconque des revendications précédentes, caractérisé en ce que la pièce précitée (1) est à la fois mobile en direction axiale et en rotation, cette pièce porte un objectif optique (2) qui est placé à une certaine distance radiale de l'axe (7), et cette pièce (1) comporte des moyens de poursuite (4) qui sont destinés à déplacer la pièce (1) en rotation pour faire en sorte que l'objectif optique (2) effectue un mouvement de poursuite.

**Patentansprüche**

1. Vorrichtung zur Positionierung eines axial beweglichen Elementes in eine neutrale axiale Position, umfassend ein auf einem Schaft (7) axial bewegliches Element (1), eine an dem axial beweglichen Element (1) angebrachte Spuleneinrichtung (3) zur Einstellung der axialen Position des axial beweglichen Elementes (1) und Mittel (5, 6, 8) zur Bildung eines magnetischen Kreises für die Erzeugung eines Magnetfeldes, in dem die Spuleneinrichtung (3) positioniert ist, wobei das axial bewegliche Element (1) mit Stücken aus magnetischem Material (11) versehen ist, die in dem magnetischen Feld angeordnet sind, so daß letzteres eine das axial bewegliche Element (1) zu einer neutralen axialen Position hin drängende Kaft ausübt,
   **dadurch gekennzeichnet,**
   daß die Stücke aus magnetischem Material (11) in der Nähe axial einander gegenüberliegender Enden des axial beweglichen Elementes (1) angeordnet sind, so daß zwischen der genannten Kraft und der Bewegung des axial beweglichen Elementes (1) eine im wesentlichen lineare Beziehung besteht.

2. Vorrichtung nach Anspruch 1,
   **dadurch gekennzeichnet,** daß die Mittel (5, 6, 8) zur Bildung eines magnetischen Kreises einen oder mehrere Permanentmagneten (6) und ein oder mehrere Joche (5, 8) aus magnetisch permeablem Material umfassen, wobei das Joch bzw. die Joche (5, 8) radial innerhalb und/oder radial außerhalb des axial beweglichen Elementes (1) angeordnet sind.

3. Vorrichtung nach Anspruch 2,
   **dadurch gekennzeichnet,** daß sowohl ein inneres Joch (5) als auch ein äußeres Joch (8) vorgesehen ist.

4. Vorrichtung nach Anspruch 2, **dadurch gekennzeichnet,** daß ein einzelnes Joch (5, 8) vorgesehen ist.

5. Vorrichtung nach wenigstens einem der Ansprüche 2 bis 4, **dadurch gekennzeichnet,** daß der Magnet (6) bzw. jeder Magnet (6) zwischen einem Joch (5, 8) und dem axial beweglichen Element (1) angeordnet ist.

6. Vorrichtung nach wenigstens einem der vorhergehenden Ansprüche, **dadurch gekennzeichnet,** daß das Element (1) sowohl axial beweglich als auch drehbar ist, daß das Element (1) eine Objektivlinse (2) trägt, die einen radialen Abstand von dem Schaft (7) hat, und daß das Element (1) mit Abgleichmitteln (4) zwecks Bewirkung einer Umfangsbewegung des Elementes (1) zum Abgleich bzw. zur Nachführung der Objektivlinse (2) versehen ist.

# F I G.1

# F I G. 2

# F I G. 3

# F I G. 4.

FOCUSING
DIRECTION

FIG. 5a.

FIG. 5b.

# F I G. 6.

# F I G. 7.

8b

6

8

8a

15

# F I G. 8.

FREQUENCY (Hz)